Europäisches Patentamt

European Patent Office

Office européen des brevets

(11) Publication number: **0 231 785 B1**

# EUROPEAN PATENT SPECIFICATION

(45) Date of publication of patent specification: **29.07.92**  (51) Int. Cl.⁵: **H02K 9/197**

(21) Application number: **87100503.9**

(22) Date of filing: **16.01.87**

Divisional application 91121789.1 filed on 16/01/87.

(54) **Vehicle mounted a.c. generator.**

(30) Priority: **30.01.86 JP 20627/86**
**30.01.86 JP 20628/86**
**30.01.86 JP 20629/86**
**12.02.86 JP 28422/86**
**13.03.86 JP 55593/86**
**18.03.86 JP 62061/86**
**18.03.86 JP 62062/86**
**18.03.86 JP 62065/86**

(43) Date of publication of application:
**12.08.87 Bulletin  87/33**

(45) Publication of the grant of the patent:
**29.07.92 Bulletin  92/31**

(84) Designated Contracting States:
**DE FR GB**

(56) References cited:
**AT-B- 216 617**
**DE-A- 2 828 473**
**GB-A- 965 801**
**GB-A- 2 117 187**

(73) Proprietor: **MITSUBISHI DENKI KABUSHIKI KAISHA**
**2-3, Marunouchi 2-chome Chiyoda-ku Tokyo 100(JP)**

(72) Inventor: **Kitamura, Yutaka**
**c/o Mitsubishi Denki Kabushiki Kaisha Himeji Works**
**840 Chiyoda-cho Himeji Hyogo(JP)**
Inventor: **Kaneyuki, Kazutoshi**
**c/o Mitsubishi Denki Kabushiki Kaisha Himeji Works**
**840 Chiyoda-cho Himeji Hyogo(JP)**
Inventor: **Iwata, Yoshiyuki**
**c/o Mitsubishi Denki Kabushiki Kaisha Himeji Works**
**840 Chiyoda-cho Himeji Hyogo(JP)**
Inventor: **Aso, Hiroaki**
**c/o Mitsubishi Denki Kabushiki Kaisha Himeji Works**
**840 Chiyoda-cho Himeji Hyogo(JP)**

(74) Representative: **Lehn, Werner, Dipl.-Ing. et al Hoffmann, Eitle & Partner Patentanwälte Arabellastrasse 4**
**W-8000 München 81(DE)**

## Description

### BACKGROUND OF THE INVENTION

The present invention relates to a vehicle mounted a.c. generator adapted to be driven by an engine of the vehicle and, particularly, to an improvement of a cooling system thereof.

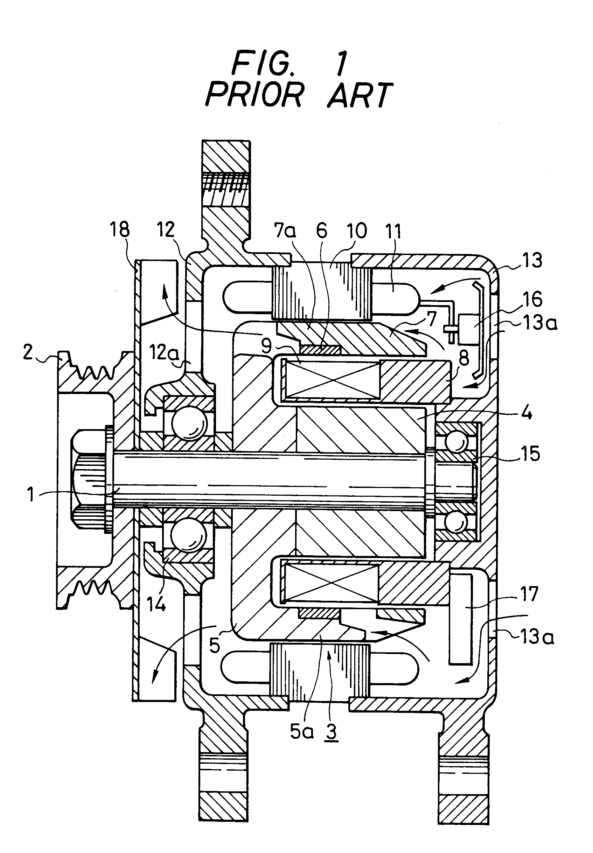

A cross section of a conventional vehicle mounted a.c. generator is shown in Fig. 1, in which a pulley 2 and a rotor 3 are secured to a rotary shaft 1 and the rotor 3 is composed of a rotor core 4 mounted on the shaft 1, a magnetic pole member 5 having a plurality of angularly spaced nails 5a formed peripherally thereof, a support ring 6 of non-magnetic material fixedly secured to an inner periphery of the nails 5a and an opposite magnetic pole member 7 fixedly secured to the support ring 6 and having a plurality of angularly spaced nails 7a which are interlieved with the nails 5a. A stationary exciting core 8 is arranged between the core 4 and the member 7 with air gaps with respect to the rotor core 4 and the opposite pole member 7 to support an exciting coil 9.

The generator further includes a stator core 10 which supports a stator coil 11 in slots thereof, a front bracket 12 supports the shaft 1 through a bearing 14, an outlet hole 12a formed in the bracket 12, a rear bracket 13 for supporting, together with the front bracket 12, the stator core 10 and the shaft 1 through a bearing 15. The bracket 13 also supports the core 8 fixedly and has an inlet port 13a for cooling air. A rectifier 16 functions to convert an a.c. power produced in the stator coil 11 into a d.c. power. A voltage regulator 17 detects a generator voltage to control an exciting current to thereby regulate a terminal voltage to a predetermined value and a fun 18 is fixed to the shaft 1.

In the conventional a.c. generator constructed as above, the shaft 1 is rotated by the engine rotation through a belt and the pulley 2. Upon the rotation of the shaft 1, an a.c. voltage is induced in the stator coil 11 which is rectified by the rectifier 16 and regulated by the voltage regulator 17, a resultant d.c. voltage being supplied to the exciting coil 9 and to a load such as a battery.

A cooling air sucked through the inlet port 13a of the rear bracket 13 by a rotation of the fun 18 fixed to the shaft 1 cools an interior of the generator and is discharged through the oulet port 12a of the front bracket 12.

In such generator, heat generated by the exciting coil 9, the stator coil 11, the bearings 14 and 15 and the voltage regulator 16 housed in the bracket 13 is discharged by the air flow mentioned above. However, it is usually insufficient to cool the inside of the bracket 13 by means of the fun 18. In order to obtain a sufficient cooling effect it is possible to use a larger fun. Howeder, with such large fun, there may be a large noise produced. Further, since air to be used to cool the generator tends to degrade insulations of various portions thereof, the use of air coolant passing through the inside of the generator should be miminized. In addition thereto, a power required to drive such a large fan becomes considerable.

### SUMMARY OF THE INVENTION

A primary object of the present invention is to provide a vehicle mounted a.c. generator which can restrict noise to a minimum level while providing a sufficient cooling effect.

Another object of the present invention is to provide a vehicle mounted a,c. generator having a simplified cooling system with a minimized noise and minimized power loss.

In order to achieve these objects, a vehicle mounted a.c. generator according to the present invention is provided comprising: a rotor shaft adapted to be driven by a vehicle engine; a rotor core fixedly secured to said shaft and adapted to be excited by an exciting coil; a stator core arranged oppositely to an outer periphery of said rotor core and with a stator coil mounted thereon; a rectifier for rectifying an output voltage generated in said stator coil; at least one annular coolant passage and a branch coolant passage characterized by front and rear brackets for supporting said stator core directly and said rotor shaft indirectly through bearings; a voltage regulator for regulating an output voltage of said rectifier to a predetermined value; a metal enclosure for enclosing end portions of said stator coil; said annular coolant passage being formed between said stator core and said brackets and between said metal enclosure and said brackets; and said branch coolant passage being formed along an end surface of said rear bracket, whereby said stator core, said stator coil, said rectifier and said voltage regulator are cooled by circulating a liquid coolant through said coolant passages. The liquid coolant may be a portion of an engine coolant.

GB-A-2 117 187 describes a vehicle mounted generator which has a stator which is secured in a generator housing and which carries at least one alternating current winding such as three phase windings and a claw-pole rotor which is drivable by the engine of the vehicle; the housing is closed and surrounds the rotor and the stator and there is maintained in the housing a circuit for cooling air sweeping the winding or windings and the rotor and heat exchanger elements are provided which form at least a portion of the housing and have the cooling air flowing therethrough and have an inlet and an outlet for a cooling-liquid circuit which is completed externally of the housing. The cooling liquid flows through at least one main coolant passage and a branch coolant passage.

GB-A-965 801 describes an electric motor in which the stator coil is immersed in a cooling fluid.

## BRIEF DESCRIPTION OF THE DRAWINGS

Fig. 1 is a cross section of a conventional vehicle mounted a.c. generator;

Fig. 2 is a cross section of an embodiment of the present invention;

Fig. 3 is a partially cut away front view of a main portion of the embodiment shown in Fig. 2;

Fig. 4 is a cross section of another embodiment of the present invention;

Figs. 5, 6 and 7 are cross sections of other embodiments of the present invention respectively;

Figs. 8 and 9 are partially cut away front views of other embodiments of the present invention, respectively;

Figs. 10 and 11 are cross sections of other embodiments of the present invention, respectively;

Fig. 12 is a cross section of another embodiment of the present invention;

Fig. 13 is an enlarged view of a main portion of the embodiment shown in Fig. 12;

Figs. 14 and 15 are cross sections of other embodiments of the present invention, respectively; and

Fig. 16 is a partially cutaway front view of the embodiment shown in Fig. 15.

## DETAILED DESCRIPTION OF THE PREFERRED EMBODIMENTS

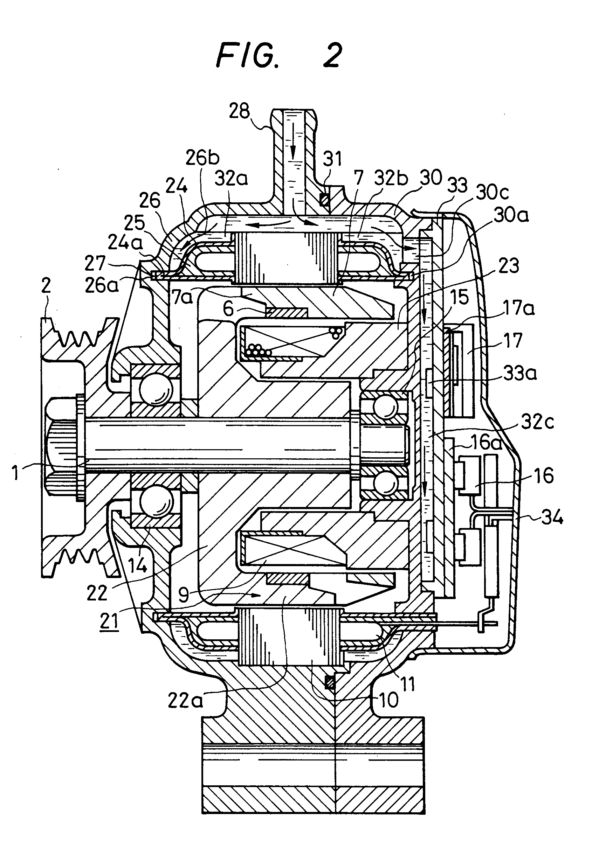

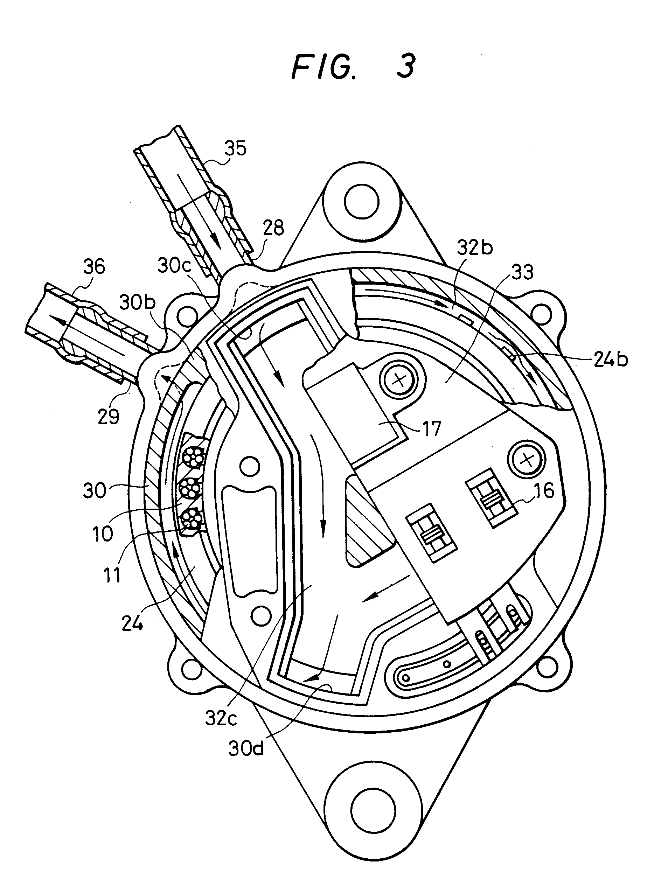

In Figs. 2 and 3, reference numerals 1, 2, 6, 7, 7a, 9-11 and 14-17 depict the same components as those of the conventional generator shown in Fig. 1, respectively, and therefore descriptions of these components are omitted for avoidance of duplication. A reference numeral 21 depicts a rotor composed of a magnetic pole member 22 fixedly secured to a shaft 1 and having a plurality of angularly spaced nails 22a provided on a periphery thereof which are interlieved with nails 7a of an opposite magnetic pole member 7.

A stationary exciting core 23 is arranged between the magnetic pole member 22 and the opposite magnetic pole member 7 with air gaps therebetween and supports an exciting coil 9. An enclosure 24 formed of a metal such as aluminum having a high thermal conductivity encloses a cylindrical stator coil 11. An insulating filler 25 such as synthetic resin fills spaces between it and the opposite end portions of the stator coil 11 to provide a liquid-tight connection to the stator core 10 to thereby protect the stator coil against the liquid coolant. A plurality of heat radiating fins 24b are formed in opposite end portions of an inner wall of the enclosure 24 circumferentially, as shown in Fig. 3.

A front bracket 26 supports the stator core 10 and is formed on an inner surface thereof with an annular groove 26a in which the fins 24a of one end portion of the enclosure 24 fit liquid-tightly with an aid of a gasket 27 of a material such as viscose silicon compound to form a pair of annular coolant passages 32a extending peripherally thereof between the enclosure 24 and the inner wall of the bracket 26. The front bracket 26 is provided with a coolant inlet pipe 28 and a coolant outlet pipe 29 between which a partition 26b is provided. A tube 35 is connected to the coolant inlet pipe 28 to supply a portion of the engine coolant from an outgoing portion of an engine cooling system and a tube 36 is connected to the outlet pipe 29 to return the coolant to the cooling system. A reference numeral 30 depicts a rear bracket to be fixedly secured through an O-ring 31 to the front bracket 26 which is formed on an inner surface thereof with a groove 30a in which the fins 24a of the other end portion of the enclosure 24 fits liquid-tightly with an aid of a viscose gasket 27. The rear bracket 30 fixedly supports the core 23 and the bearing 15. The bracket 30 is formed with a coolant branch inlet port 30c and a return port 30d. A coolant passage 32b is formed between the inner wall of the rear bracket 30 and an outer surface of the enclosure 24 and a partition 30b is also formed to separate the incoming side from the outgoing side.

A cooling cover 33 of a metal having a good thermal conductivity is liquid-tightly mounted on an outer end portion of the rear bracket 30, between which a branch passage 32c is formed through which the coolant from the branch port 30c flows. The coolant is then returned through the return port 30d to the passage 32b. A plurality of heat radiating fins 33a are arranged on an inner surface of the cooling cover 33 along the flowing direction of the coolant. A rectifier 16 is fixedly secured through a heat sink 16a to an outer end surface of the cooling cover 33 and a voltage regulator 17 is also secured through a heat sink 17b thereto. A reference numeral 34 depicts a protection cover mounted to the rear bracket 30.

A coolling effect obtained by the cooling system mentioned above will be described. A portion of the coolant of the vehicle engine, which is relatively low temperature, is used for cooling the generator. The coolant portion flows from the inlet pipe 28 through the passages 32a and 32b as shown by arrows to cool the stator core 10 and the stator coil 11. The coolant whose temperature is risen thereby is discharged through the outlet pipe 29 to the return path of the engine coolant circulation system.

A portion of the coolant flown through the inlet pipe 28 into the passage 32b passes through the branch port 30b and the branch passage 32c to cool the rectifier 16 and the voltage regulator 17 indirectly through the cooling cover 33 and then returned to the passage 32b as shown by arrows.

The front bracket 30 which is cooled directly by the coolant absorbs heat generated in the bearing 14 and the rear bracket 30 which is also cooled directly absorbs heat generated in the bearing 15 and in the exciting coil 9 through the core 23.

The plurality of heat radiating fins 24b provided on the respective end portions of the enclosure 24 and the plurality of heat radiating fins 33a provided on the cooling cover 33 increase the heat exchange effect and hence the cooling effect.

It may be possible to use a separate coolant circulation system instead of the cooling passage from the passage 32b through the branch passage 32c.

Thus, the stator coil 11, the rectifier 16, the voltage regulator 17 and the energizing coil 9 which produce large heat are cooled effectively, so that temperatures thereof are restricted substantially without using fan cooler which is a source of noise.

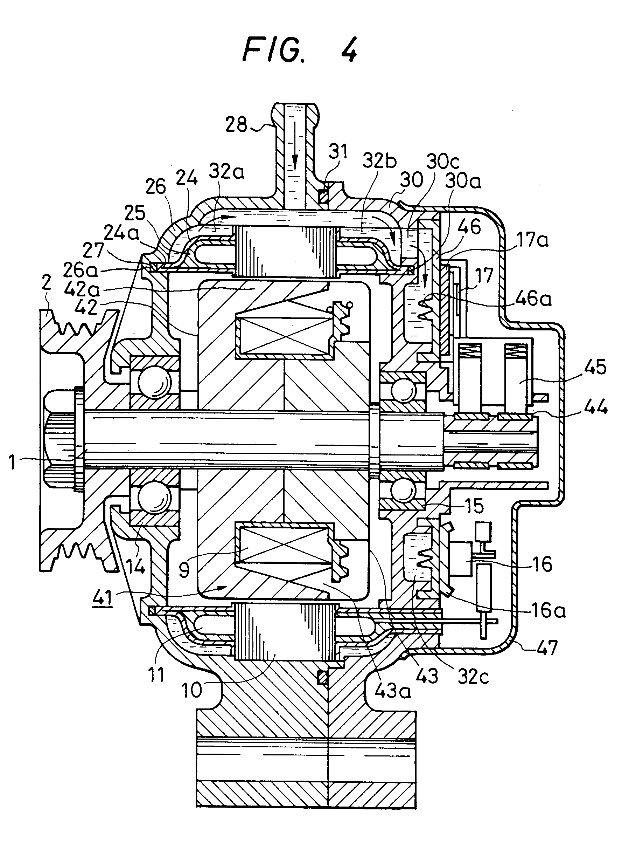

Fig. 4 shows a second embodiment of the present invention in which components shown by the same reference numerals as used in Figs. 2 and 3 are the same components as those in the first embodiment. A rotor 41 is composed of one and the opposite pole cores 42 and 43 fixedly secured to a rotor shaft 1 and an exciting coil 9 supported thereby. A plurality nails 42a protruding from the pole cord 42 are interlieved with a plurality nails 43a protruding from the core 43 as in the first embodiment. A brush device 45 supplies electric power to slip-rings 44 connected to the exciting coil 9. A cooling cover 46 is liquid-tightly mounted to a rear bracket 30 to form a branch passage 32c therebetween and a rectifier 16 and a voltage regulator 17 are mounted on a cooling cover 46. A reference numeral 47 depicts a protection cover.

The front and rear brackets 26 and 30 are directly cooled by the coolant and inside air cooled by these brackets is agitated by rotation of the rotor 41 to cool the exciting coil 9 effectively.

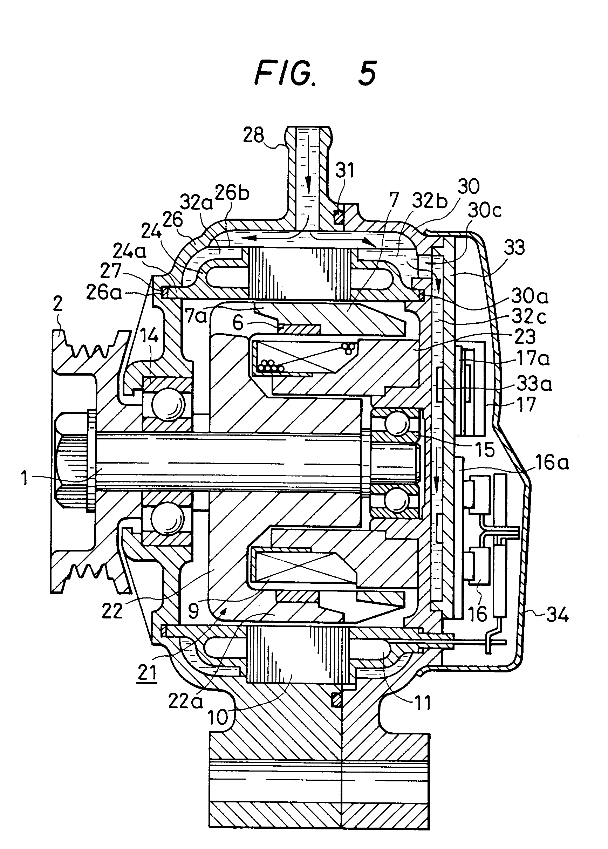

In the embodiment shown in Figs. 2 and 3, the stator coil 11 is covered by the enclosure 24 of the good thermal conductive material and the enclosure is filled with the resin. In a third embodiment shown in Fig. 5, however, a stator coil 11 is enclosed directly by an insulating synthetic resin mold and supported liquid-tightly by a front and a rear bracket 26 and 30 so that coolant passages 32a and 32b are formed.

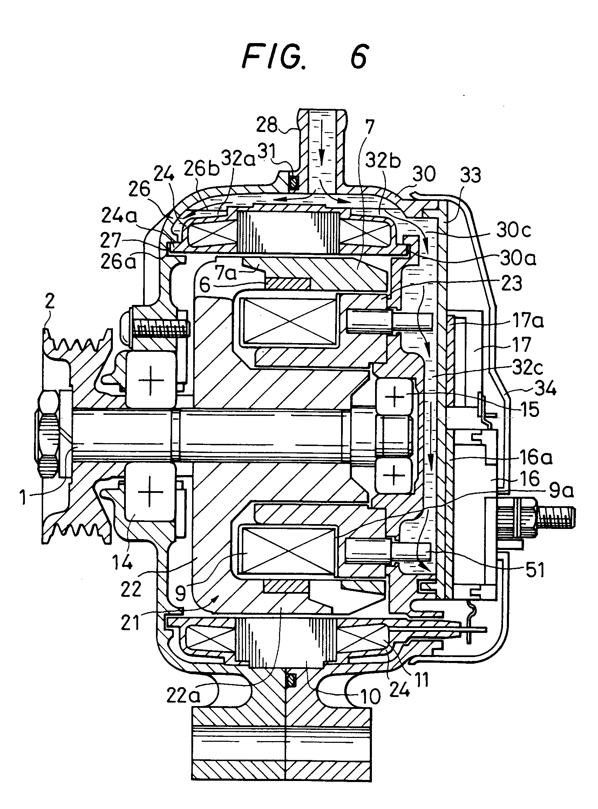

Fig. 6 shows a fourth embodiment of the present inveniton in which one end of a good thermal conductive member 51 is thermally coupled to a stationary core 23 and the other end thereof protrudes into a branch passage 32c formed between a rear bracket 30 and a cooling cover 33. With this construction, a coolant flowing through the branch passage 32c cools a rectifier 16 and a voltage regulator 17 indirectly through the cooling cover 33 and a bearing 15 and the core 23 indirectly through a front bracket 26. Further, the core 23 and an exciting coil 9 are cooled by the thermally conductive member 51.

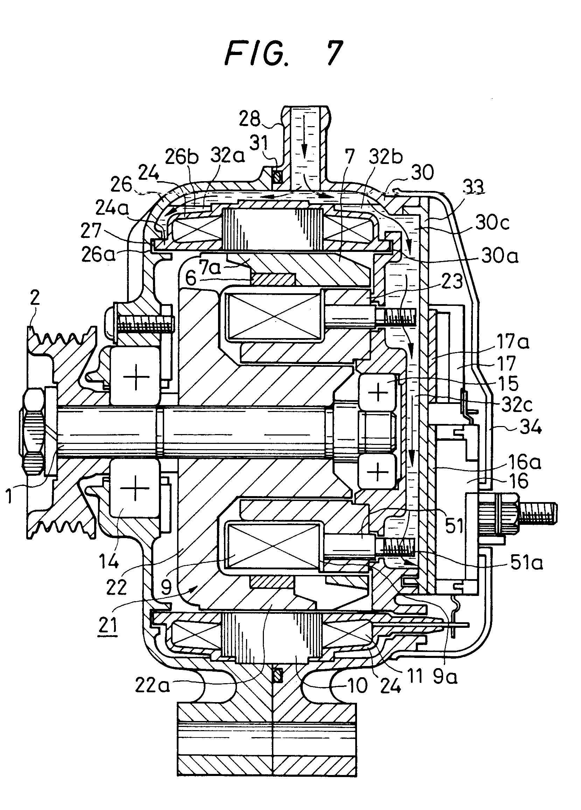

Fig. 7 is a fifth embodiment of the present invention which differs from the fourth embodiment in Fig. 6 in that a plurality of heat radiating fins 51a in the form of flanges are formed on the protruded portion of the thermally conductive member 51, that a bobbin 9a of the exciting coil 9 is formed of a good thermal conductivity material and that an end portion of the thermally conductive member 51 is pressure-contacted to the bobbin 9a to obtain a good thermal coupling therebetween. With such construction of the fifth embodiment, the cooling of the exciting coil 9 becomes more effective.

It may be possible to use the so-called heat pipe composed of a metal pipe filled with a coolant which evaporates with heat and liquefied when cooled, as the thermally conductive member 51.

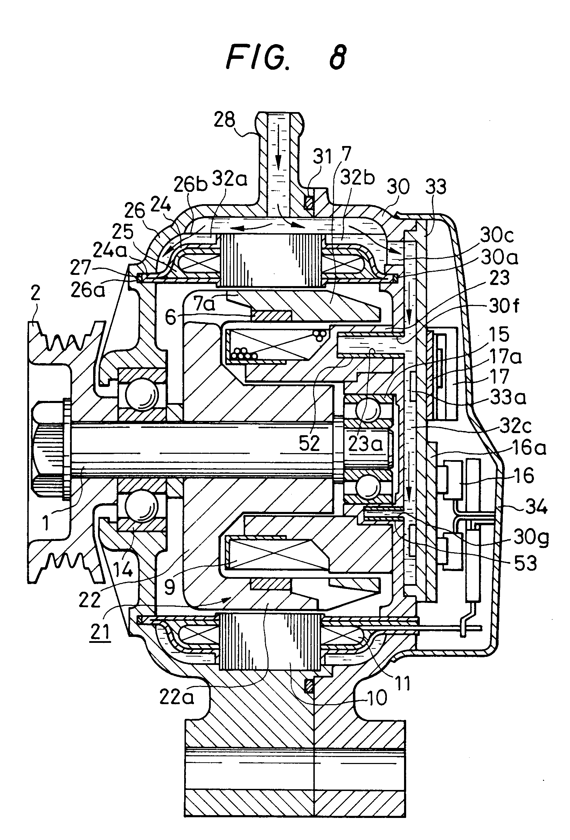

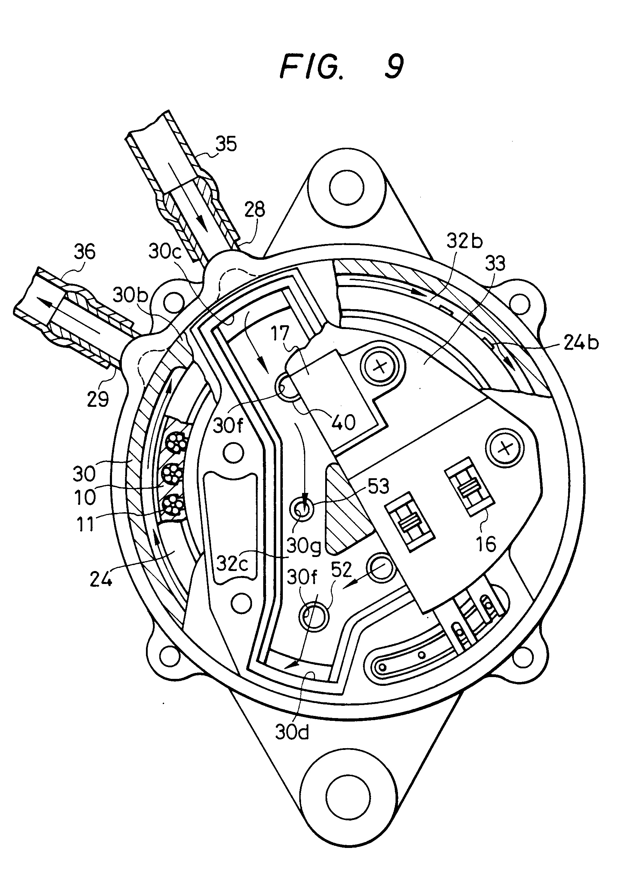

Figs. 8 and 9 show a sixth embodiment of the present invention. In the sixth embodiment, a stationary core 23 is provided in an outer end surface thereof with a blind hole 23a and a rear bracket 30 is provided with blind holes 30f and 30g. Pipes 52 and 53 are inserted thereinto, into which a portion of a coolant flowing through a passage 32c is introduced to cool the core 23 and a bearing 15 peripherally.

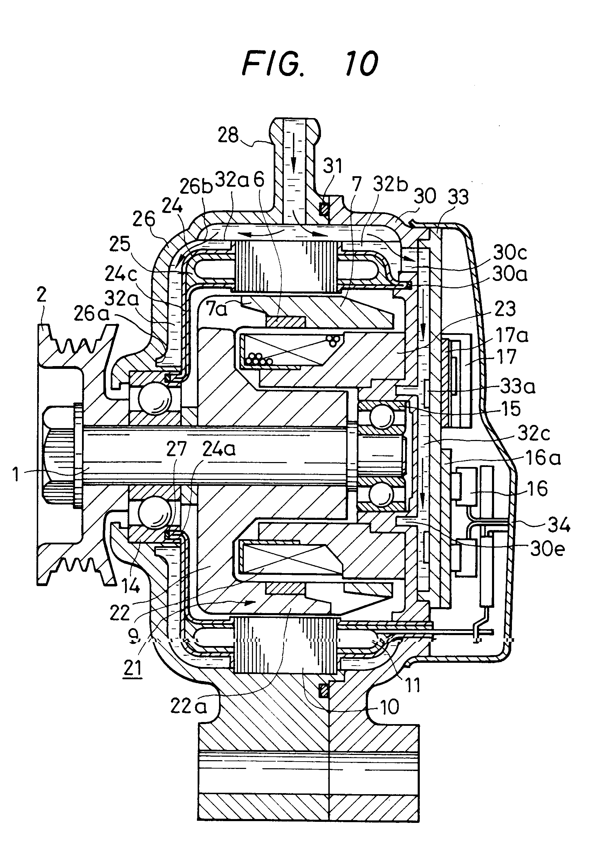

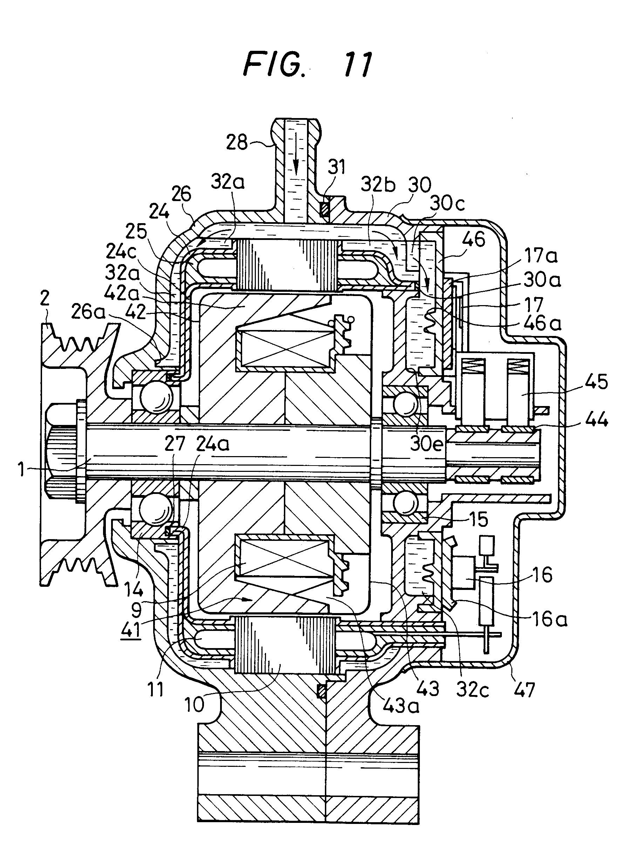

It is possible to construct the generator such that bearings 14 and 15 supported by a front and rear brackets 26 and 30 are cooled by a coolant as shown in Figs. 10 and 11. In Figs. 10 and 11 which show a seventh and eighth embodiments, respectively, an end portion of an enclosure 24 enclosing a stator coil 11 is elongated axially to engage with an outer peripheral end surface of the bearing 14 and the front bracket 26 is formed in an area thereof surrounding the bearing 14 with an annular recess 26a. Further, the rear bracket 30 is formed with an annular recess 30a to receive the other end of the enclosure 24 and another annular recess 30e. The coolant is introduced into the recesses 26a and 30e to cool the bearings 14 and 15.

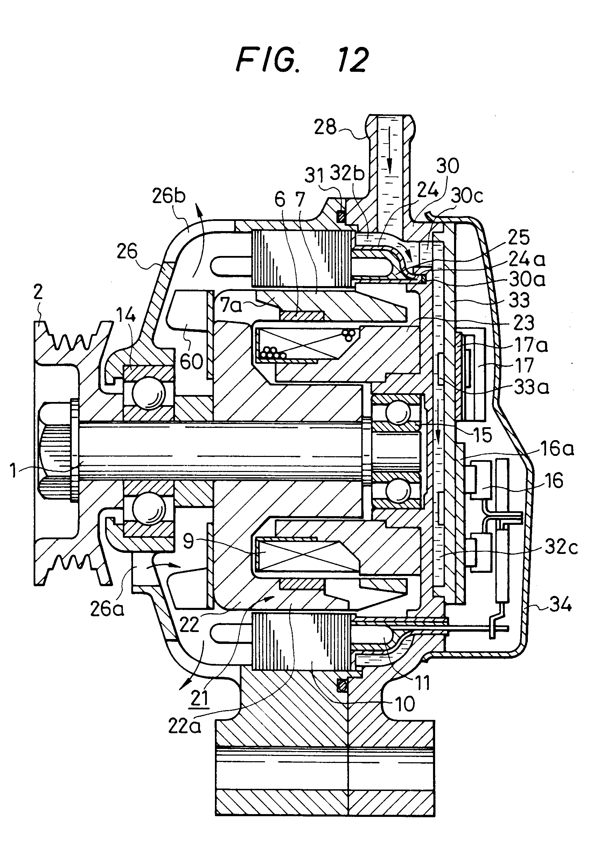

Fig. 12 shows a nineth embodiment of the present invention which further includes a fan cooling system in addition to the liquid coolant system.

In Fig. 12, a rear bracket 30 is provided with a coolant inlet pipe 28 and a coolant outlet pipe 29 and a coolant passage 32a is formed to pass a coolant through an area of a stator coil 11 faced to the rear bracket 30. Further, a branch passage 32c for cooling a rectifier 16 and a voltage regulator 17 is also formed. The above mentioned portion of the construction of the emobdiment shown in Fig. 12 is the same as that of the embodiment shown in Figs. 2 and 3.

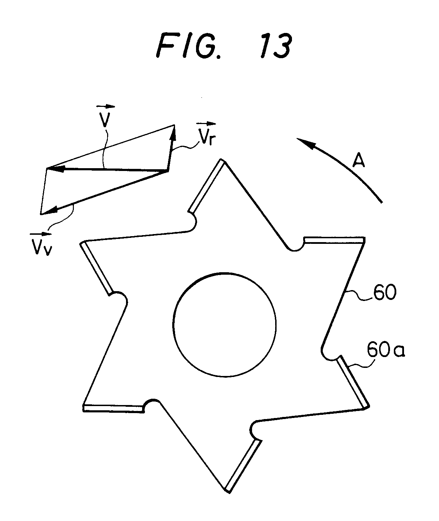

In the embodiment in Fig. 12, the front bracket 26 is formed in an area surrounding the bearing 14 with air intake holes 26a and in a peripheral area with air discharge holes 26b. A fan 60 is provided on a front end surface of a magnetic pole core 22. The fan 60 is composed of a generally hexagonal plate having six extensions which are bent at right angle to form fins 60a as shown in Fig. 13. Each of the fins 60a is slanted at sweepback angle with respect to a direction A of rotation thereof.

In operation, the fan 60 is rotated with a rotation of the rotor shaft 1 driven by the vehicle engine through the belt and pulley 2 to take air through the intake holes 26a into an interior of the front bracket 26. The cooling air cools the bearing 14 and a front end portion of the stator coil 11 and is discharged through the discharge holes 26b.

On the other hand, a portion of a low temperature liquid coolant for the vehicle engine is branched and introduced through the inlet pipe 28 into the passage 32b as shown by an arrow to cool the rear side end of the stator coil 11 and then discharged through the outlet pipe 29 to the return path of the engine coolant circulation system.

A portion of the coolant introduced through the inlet pipe 28 into the passage 32b flows through a branch port 30c to the branch passage 32c to indirectly cool the rectifier 16 and the voltage regulator 17 through the cooling cover 33 and then returned to the passage 32b.

The rear bracket 30 which is directly cooled by the liquid coolant cools the bearing 15 and the exciting coil 9 through the stationary core 23.

A speed vector of the cooling air passed through the fin 60a of the fan 60 is Vr with respect to a rotary coordinate system fixed to the fan 60 as shown in Fig. 13. However, the vector of the cooling air leaving the fan 60 becomes V since a relative speed vector Vv with respect to an inertia coordinate system is added as shown in Fig. 13. With the fan construction shown in Fig. 12, an absolute speed V of the cooling air is very large, so that the cooling effect of the stator coil 11 becomes several times that of the conventional fan. Therefore, the fan 60 can be small in size comparing with the fan 18 shown in Fig. 1 so long as it is to be expected to obtain the same cooling effect. With such small size fan, the noise is very small and a higher speed operation of the fan is achieved without difficulty, while providing a sufficient cooling effect.

Thus, the stator coil 11, the rectifier 16, the voltage regulator 17 and the exciting coil 9 which are large heat generators of the a.c. generator are effectively cooled by the air coolant and the liquid coolant.

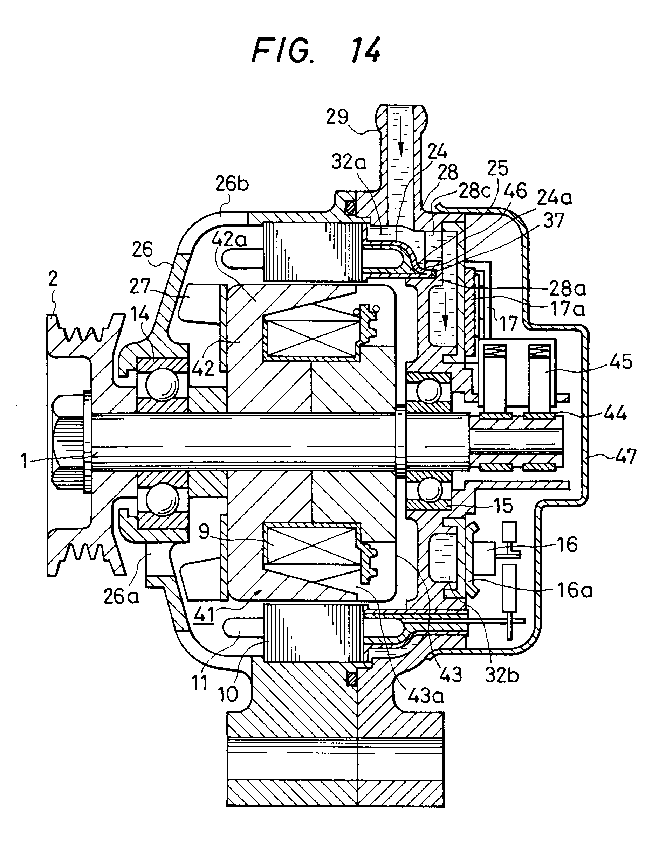

Fig. 14 shows a tenth embodiment of the present invention in which an energizing core 42 supports the energizing coil 9 of the embodiment in Fig. 12.

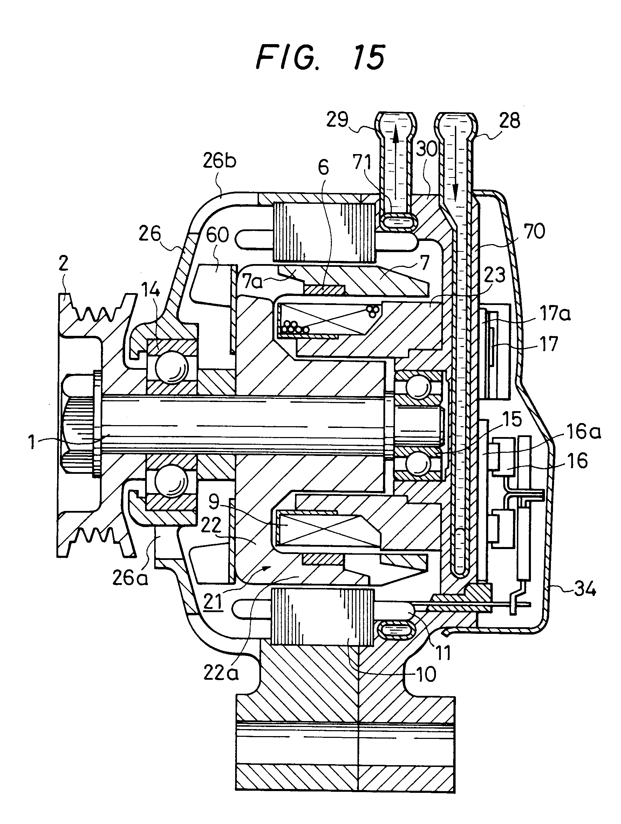

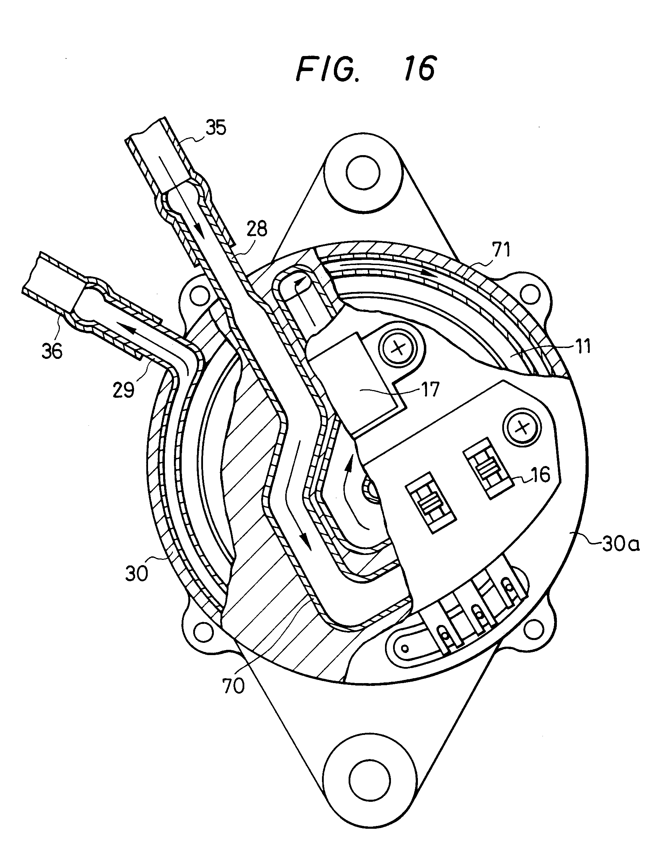

Figs. 15 and 16 show an eleventh embodiment of the present invention. In this embodiment, a cooling pipe 70 connected to an inlet pipe 28 is arranged in around an end wall of a rear bracket 30 and a cooling pipe 71 connected to an outlet pipe 29 is arranged in around a side wall of the rear bracket 30, through which a cooling liquid is circulated to cool a stator coil 11, a bearing 15, a rectifier 16 and a voltage regulator 17.

As described hereinbefore, according to the present invention, the noise and energy loss due to the use of the cooling fun can be at least minimized while increasing the cooling efficiency of the generator. Further, since the generator is liquid-tightly sealed, it is possible to avoid the problems of insulation degradation due to atmosphere and other damages due to toxic gas or salt damages.

## Claims

1. A vehicle mounted a.c. generator, comprising:

a rotor shaft (1) adapted to be driven by a vehicle engine;

a rotor core (4) fixedly secured to said shaft and adapted to be excited by an exciting coil (9);

a stator core (10) arranged oppositely to an outer periphery of said rotor core (4) and with a stator coil (11) mounted thereon;

a rectifier (16) for rectifying an output voltage generated in said stator coil (11);

at least one annular coolant passage (32a,32b) and a branch coolant passage (32c) characterized by

front (26) and rear brackets (30) for supporting said stator core (10) directly and said rotor shaft (1) indirectly through bearings (14,15);

a voltage regulator (17) for regulating an output voltage of said rectifier (16) to a predetermined value;

a metal enclosure (24) for enclosing end portions of said stator coil (11);

said annular coolant passage (32a,32b) being formed between said stator core (10) and said brackets (26,30) and between said metal enclosure (24) and said brackets (26,30); and

said branch coolant passage (32c) being formed along an end surface of said rear bracket (30), whereby said stator core (10), said stator coil (11), said rectifier (16) and said voltage regulator (17) are cooled by circulating a liquid coolant through said coolant passages (32a, 32b; 32c).

2. The vehicle mounted a.c. generator as claimed in claim 1, wherein said metal enclosure (24) encloses opposite end portions of said stator coil (11).

3. The vehicle mounted a.c. generator as claimed in claim 1, further comprising a cooling cover (33) attached to an outer side surface of said rear bracket (30), said rectifier (16) and voltage regulator (17) being mounted on an outer peripheral surface of said cooling cover (33), said branch coolant passage (32c) being formed between said rear bracket (30) and said cooling cover (33).

4. The vehicle mounted a.c. generator as claimed in claim 3, further comprising annular recesses (26a,30e) formed in an area of an inner surface of said front bracket (26) and an area of an outer surface of said rear bracket (30) which surround said bearings (14,15), respectively, said annular recesses (26a,30e) being communicated with said annular coolant passage, whereby said bearings (14,15) are cooled by liquid coolant flowing through said annular recesses (26a,30e).

5. The vehicle mounted a.c. generator as claimed in claim 1, further comprising at least one through hole formed in said rear bracket (30) to communicate said annular coolant passage (32a) with said branch coolant passage (32c) to thereby branch said coolant,

6. The vehicle mounted a.c, generator as claimed in claim 1, wherein said liquid coolant is a portion of an engine coolant circulating through a coolant circulation system of said engine.

7. The vehicle mounted a.c. generator as claimed in claim 2, further comprising a plurality of heat radiating fins (24a) protruding from said metal enclosure (24) into said annular coolant passage (32a).

8. The vehicle mounted a.c. generator as claimed in claim 3, further comprising a plurality of heat radiating fins (33a) protruding from said cooling cover (33) into said branch coolant passage (32c).

9. The vehicle mounted a.c. generator as claimed in claim 1, wherein said enclosure (24) is filled with an insulating synthetic resin material, opposite end portions of said enclosure (24) being liquid-tightly connected to said front (26) and rear brackets (30) to form said annular coolant passages (32a,32b).

10. The vehicle mounted a.c. generator according to claim 3, further comprising a stationary core (23) for supporting said exciting coil (9); said stationary core (23) being fixedly secured to said rear bracket (30) in cooling cover (33) for covering a side end surface of said rear bracket (30) to form, together with said rear bracket (30), the branch coolant passage (32c); said rectifier (16) being mounted to an outer periphery of said cooling cover (33); said voltage regulator (17) being mounted to said outer periphery of said cooling cover (33); and high thermal conductive members (51) coupled to said stationary core (23) and extending therefrom through said rear bracket (30) into said branch coolant passage (32c).

11. The vehicle mounted a.c. generator as claimed in claim 10, wherein said high thermal conductive members (51) are pressure contacted at one end thereof to a bobbin (9a) of said exciting coil (9).

12. The vehicle mounted a.c. generator as claimed in claim 10, wherein a portion of each of said high thermal conductive members (51) in said branch coolant passage (32c) is formed with a plurality of heat radiating fins (51a).

13. The vehicle mounted a.c. generator as claimed in claim 10, wherein each of said high thermal conductive members (51) comprises a heat pipe.

14. A vehicle mounted a.c. generator according to claim 3, further comprising a stationary core (23) for supporting said energizing coil (9); said stationary core (23) being fixedly secured to said rear bracket (30); a cooling cover (33) for covering an end surface of said rear bracket (30) to form, together with said rear bracket (30), the branch coolant passage (32c) and a coolant passage (23a) formed in said stationary core (23) and extending through said rear bracket (30) to said branch coolant passage (32c).

15. The vehicle mounted a.c. generator as claimed in claim 1, further comprising fins (60a) formed integrally with said rotor core (1) and wherein said front bracket (26) is formed around said bearing supporting portion thereof and in an outer periphery thereof with holes (26a,26b) for passing air into and away from said front bracket (26) with a rotation of said shaft (1).

16. A vehicle mounted a.c. generator according to claim 1 and 15, wherein the metal enclosure (24) and the coolant passages are constituted by a cooling pipe (70,71) provided in said rear bracket (30) for cooling through circulation of a liquid, said stator coil (11), said rectifier (16), said voltage regulator (17) and said bearing (15) associated with said rear bracket (30).

**Revendications**

1. Générateur de courant alternatif monté sur véhicule, comprenant :

    un arbre de rotor (1) conçu pour être entraîné par un moteur de véhicule ;

    un noyau de rotor (4) fixé à demeure audit arbre et conçu pour être activé par une bobine d'excitation (9) ;

    un noyau de stator (10) disposé à l'opposé d'une périphérie extérieure dudit noyau de rotor (4), une bobine de stator (11) étant montée sur celui-ci ;

    un redresseur (16) pour redresser une tension de sortie produite dans ladite bobine de stator (11) ;

    au moins un conduit annulaire (32a, 32b) d'agent de refroidissement et un conduit d'agent de refroidissement dérivé (32c), caractérisé par :

    des supports avant (26) et arrière (30) pour supporter ledit noyau de stator (10) directement et ledit arbre de rotor (1) indirectement par l'intermédiaire de paliers (14, 15) ;

    un conjoncteur-disjoncteur (17) pour réguler une tension de sortie dudit redresseur (16) à une valeur prédéterminée ;

    une enceinte métallique (24) pour entourer des parties d'extrémité de ladite bobine de stator (11) ;

    ledit conduit d'agent de refroidissement annulaire (32a, 32b) étant formé entre ledit noyau de stator (10) et lesdits supports (26, 30) et entre ladite enceinte métallique (24) et lesdits supports (26, 30) ; et

    ledit conduit d'agent de refroidissement dérivé (32c) étant formé le long d'une surface d'extrémité dudit support arrière (30) ce par quoi ledit noyau de stator (10), ladite bobine de stator (11), ledit redresseur (16) et ledit conjoncteur-disjoncteur (17) sont refroidis en faisant circuler un liquide de refroidissement dans lesdits conduits d'agent de refroidissement (32a, 32b, 32c).

2. Générateur de courant alternatif monté sur véhicule selon la revendication 1, dans lequel ladite enceinte métallique (24) entoure des parties d'extrémité opposées de ladite bobine de stator (11).

3. Générateur de courant alternatif monté sur véhicule selon la revendication 1, comprenant en outre un couvercle de refroidissement (33) attaché à une surface du côté extérieur dudit support arrière (30), ledit redresseur (16) et ledit conjoncteur-disjoncteur (17) étant montés sur une surface périphérique extérieure dudit couvercle de refroidissement (33), ledit conduit d'agent de refroidissement dérivé (32c) étant formé entre ledit support arrière (30) et ledit couvercle de refroidissement (33).

4. Générateur de courant alternatif monté sur véhicule selon la revendication 3, comprenant en outre des évidements annulaires (26a, 30e) formés dans une région d'une surface intérieure dudit support avant (26) et une région d'une surface extérieure dudit support arrière (30) et qui entourent respectivement lesdits paliers (14, 15), lesdits évidements annulaires (26a, 30e) communiquant avec ledit conduit d'agent de refroidissement annulaire, ce par quoi lesdits paliers (14, 15) sont refroidis par le liquide de refroidissement s'écoulant dans lesdits évidements annulaires (26a, 30e).

5. Générateur de courant alternatif monté sur véhicule selon la revendication 1, comprenant en outre au moins un trou traversant formé dans ledit support arrière (30) pour relier ledit conduit d'agent de refroidissement annulaire (32a) audit conduit d'agent de refroidissement dérivé (32c) pour dériver par ce moyen ledit agent de refroidissement.

6. Générateur de courant alternatif monté sur véhicule selon la revendication 1, dans lequel ledit liquide de refroidissement est une partie du liquide de refroidissement de moteur circulant dans un système de circulation de liquide de refroidissement dudit moteur.

7. Générateur de courant alternatif monté sur véhicule selon la revendication 2, comprenant en outre une pluralité d'ailettes de rayonnement thermique (24a) faisant saillie de ladite enceinte métallique (24) vers l'intérieur dudit conduit d'agent de refroidissement annulaire (32a).

8. Générateur de courant alternatif monté sur véhicule selon la revendication 3, comprenant en outre une pluralité d'ailettes de rayonnement thermique (33a) faisant saillie dudit couvercle de refroidissement (33) vers l'intérieur dudit conduit d'agent de refroidissement dérivé (32c).

9. Générateur de courant alternatif monté sur véhicule selon la revendication 1, dans lequel ladite enceinte (24) est remplie d'un matériau en résine synthétique isolante, des parties d'extrémité opposées de ladite enceinte (24) étant reliées de manière étanche au liquide auxdits supports avant (26) et arrière (30) pour former lesdits conduits d'agent de refroidissement annulaires (32a, 32b).

10. Générateur de courant alternatif monté sur véhicule selon la revendication 3, comprenant en outre un noyau fixe (23) pour supporter ladite bobine d'excitation (9) ; ledit noyau fixe (23) étant fixé à demeure audit support arrière (30) dans le couvercle de refroidissement (33) pour couvrir une surface d'extrémité du côté dudit support arrière (30) afin de former, avec ledit support arrière (30) le conduit d'agent de refroidissement dérivé (32c) ; ledit redresseur (16) étant monté sur la périphérie extérieure dudit couvercle de refroidissement (33) ; ledit conjoncteur-disjoncteur (17) étant monté sur ladite périphérie extérieure dudit couvercle de refroidissement (33) ; et des éléments très bons conducteurs thermiques (51) couplés audit noyau fixe (23) et s'étendant à partir de celui-ci à travers ledit support arrière (30) dans ledit conduit d'agent de refroidissement dérivé (32c).

11. Générateur de courant alternatif monté sur véhicule selon la revendication 10, dans lequel lesdits éléments bons conducteurs thermiques (51) sont en contact sous pression à l'une de leurs extrémités avec un enroulement (9a) de ladite bobine d'excitation (9).

12. Générateur de courant alternatif monté sur véhicule selon la revendication 10, dans lequel une partie de chacun des éléments bons conducteurs thermiques (51) dans ledit conduit d'agent de refroidissement dérivé (32c) est formée avec une pluralité d'ailettes de rayonnement thermique (51a).

13. Générateur de courant alternatif monté sur véhicule selon la revendication 10, dans lequel chacun des éléments bons conducteurs thermiques (51) comprend un caloduc.

14. Générateur de courant alternatif monté sur véhicule selon la revendication 3, comprenant en outre un noyau fixe (23) pour supporter ladite bobine d'excitation (9), ledit noyau fixe (23) étant fixé à demeure audit support arrière (30) ; un couvercle de refroidissement (33) pour recouvrir une surface d'extrémité dudit support arrière (30) pour former, avec ledit support arrière (30), le conduit d'agent de refroidissement dérivé (32c) et un conduit d'agent de refroidissement (23a) formé dans ledit noyau fixe (23) et s'étendant à travers ledit support arrière (30) vers ledit conduit d'agent de refroidissement dérivé (32c).

15. Générateur de courant alternatif monté sur véhicule selon la revendication 1, comprenant en outre des ailettes (60a) formées d'une seule pièce avec ledit noyau de rotor (1), et dans lequel ledit support avant (26) est formé autour de ladite partie de celui-ci supportant le palier et dans la périphérie extérieure de celui-ci avec des trous (26a, 26b) pour faire passer de l'air vers ledit support avant (26) et l'éloigner de celui-ci par une rotation dudit arbre (1).

16. Générateur de courant alternatif monté sur véhicule selon la revendication 1 et la revendication 15, dans lequel l'enceinte métallique (24) et les conduits d'agent de refroidissement sont constitués par un tube de refroidissement (70, 71) disposé dans ledit support arrière (30) pour refroidir par circulation d'un liquide, ladite bobine de stator (11), ledit redresseur (16), ledit conjoncteur-disjoncteur (17) et ledit palier (15) associés avec ledit support arrière (30).

**Patentansprüche**

1. Ein in einem Fahrzeug angebrachter Wechselstrom-(A.C.)-Generator, umfassend: eine Rotorwelle (1), die ausgelegt ist, um von einem Fahrzeugmotor angetrieben zu werden; einen Rotorkern (4), der fest auf der Welle befestigt ist und der ausgelegt ist, um von einer Erregerspule (9) angeregt zu werden; einen Statorkern (10), der gegenüber einem äußeren Umfang des Rotorkerns (4) und mit einer darauf befestigten Statorspule (11) angeordnet ist; einen Gleichrichter (16) zum Gleichrichten einer in der Statorspule (11) erzeugten Ausgangsspannung; wenigstens eine ringförmige Kühlmittel-Durchführung (32a, 32b) und eine Abzweigungskühlmittel-Durchführung (32c); **gekennzeichnet** durch vordere (26) und hintere Träger (30), um den Statorkern (10) direkt und die Rotorwelle (1) indirekt mit Lagern (14, 15) zu halten;

einen Spannungsregler (17) zum Regeln einer Ausgangsspannung des Gleichrichters (16) auf einen vorgegebenen Wert;

eine Metallumhüllung (24) zum Umhüllen von Endabschnitten der Statorspule (11);

wobei die ringförmige Kühlmittel-Durchführung (32a, 32b) zwischen dem Statorkern (10) und den Trägern (26, 30) und zwischen den Metallumhüllungen (24) und den Trägern (26, 30) gebildet wird; und

wobei die Abzweigungskühlmittel-Durchführung (32c) entlang einer Endoberfläche des hinteren Trägers (30) gebildet wird, wobei der Statorkern (10), die Statorspule (11), der Gleichrichter (16) und der Spannungsregler (17) durch Umströmen eines flüssigen Kühlmittels durch die Kühlmittel-Durchführungen (32a, 32b; 32c) gekühlt werden.

2. In einem Fahrzeug eingebauter Wechselstrom-(A.C.)-Generator nach Anspruch 1, dadurch **gekennzeichnet,** daß die Metallumhüllung (24) entgegengesetzte Endabschnitte der Statorspule (11) umhüllt.

3. In einem Fahrzeug eingebauter Wechselstrom-(A.C.)-Generator nach Anspruch 1, außerdem umfassend eine Kühlabdeckung (33), die an eine äußere Seitenoberfläche des hinteren Trägers (30) befestigt ist, wobei der Gleichrichter (16) und Spannungsregler (17) an einer äußeren Umfangsoberfläche der Kühlabdeckung (33) befestigt ist, wobei die Abzweigungskühlmittel-Durchführung (32c) zwischen dem hinteren Träger (30) und der Kühlabdeckung (33) gebildet wird.

4. In einem Fahrzeug eingebauter Wechselstrom-(A.C.)-Generator nach Anspruch 3, außerdem umfassend ringförmige Aussparungen (26a, 30e), die in einem Bereich einer inneren Oberfläche des vorderen Trägers (26) und einem Bereich einer äußeren Oberfläche des hinteren Trägers (30), die jeweils die Lager (14, 15) umgeben, gebildet sind, wobei die ringförmigen Aussparungen (26a, 30e) mit der ringförmigen Kühlmittel-Durchführung in Verbindung stehen, wodurch die Lager (14, 15) von durch die ringförmigen Aussparungen (26a, 30e) fließendem flüssigen Kühlmittel gekühlt werden.

5. In einem Fahrzeug eingebauter Wechselstrom-(A.C.)-Generator nach Anspruch 1, außerdem umfassend wenigstens ein Durchgangsloch, das in dem hinteren Träger (30) gebildet ist, um die ringförmige Kühlmittel-Durchführung (32a) mit der Abzweigungskühlmittel-Durchführung (32c) in Verbindung zu bringen, um dadurch das Kühlmittel zu verzweigen.

6. In einem Fahrzeug eingebauter Wechselstrom-(A.C.)-Generator nach Anspruch 1, dadurch **gekennzeichnet,** daß das flüssige Kühlmittel ein Teil eines Motorkühlmittels ist, das in einem Kühlkreislauf des Motors zirkuliert.

7. In einem Fahrzeug eingebauter Wechselstrom-(A.C.)-Generator nach Anspruch 2, außerdem umfassend eine Vielzahl von wärmeabstrahlenden Kühlrippen (42a), die von der Metallumhüllung (24) in die ringförmige Kühlmittel-Durchführung (32a) vorstehen.

8. In einem Fahrzeug eingebauter Wechselstrom-(A.C.)-Generator nach Anspruch 3, außerdem umfassend eine Vielzahl von wärmeabstrahlenden Kühlrippen (33a), die von der Kühlabdeckung (33) in die Abzweigungskühlmittel-Durchführung (32c) vorstehen.

9. In einem Fahrzeug eingebauter Wechselstrom-(A.C.)-Generator nach Anspruch 1, dadurch **gekennzeichnet,** daß die Umhüllung (24) mit einem isolierenden synthetischen Kunstharzmaterial gefüllt ist, wobei entgegengesetzte Endabschnitte der Umhüllung (24) flüssigkeitsdicht mit den vorderen (26) und hinteren Trägern (30) verbunden sind, um die ringförmigen Kühlmittel-Durchführungen (32a, 32b) zu bilden.

10. In einem Fahrzeug eingebauter Wechselstrom-(A.C.)-Generator nach Anspruch 3, außerdem umfassend einen stationären Kern (23) zum Halten der Erregerspule (9); wobei der stationäre Kern (23) fest an dem hinteren Träger (30) in der Kühlabdeckung (33) befestigt ist, um eine Seitenenoberfläche des hinteren Trägers (30) abzudecken, um zusammen mit dem hinteren Träger (30) die Abzweigungskühlmittel-Durchführung (32c) zu bilden; wobei der Gleichrichter (16) an einem äußeren Umfang der Kühlabdeckung (33) befestigt ist; wobei der Spannungsregler (17) auf dem äußeren Umfang der Kühlabdeckung (33) befestigt ist; und thermisch hochleitende Elemente (51), die mit dem stationären Kern (24) verbunden sind, und sich davon durch den hinteren Träger (30) in die Abzweigungskühlmittel-Durchführung (32c) erstrecken.

**11.** In einem Fahrzeug eingebauter Wechselstrom-(A.C.)-Generator nach Anspruch 10, dadurch **gekennzeichnet,** daß die thermisch hochleitenden Elemente (51) einen festen Druckkontakt an einem Ende davon mit einem Spulenkörper (9a) der Erregerspule (9) eingehen.

**12.** In einem Fahrzeug eingebauter Wechselstrom-(A.C.)-Generator nach Anspruch 10, dadurch **gekennzeichnet,** daß ein Abschnitt von jedem der thermisch hochleitenden Elemente (51) in der Abzweigungskühlmittel-Durchführung (32c) mit einer Vielzahl von wärmeabstrahlenden Kühlrippen (51a) gebildet ist.

**13.** In einem Fahrzeug eingebauter Wechselstrom-(A.C.)-Generator nach Anspruch 10, dadurch **gekennzeichnet,** daß jedes der thermisch hochleitenden Elemente (51) ein Wärmerohr umfaßt.

**14.** In einem Fahrzeug eingebauter Wechselstrom-(A.C.)-Generator nach Anspruch 3, außerdem umfassend einen stationären Kern (23) zum Halten der Erregerspule (9); wobei der stationäre Kern (23) an dem hinteren Träger (30) fest befestigt ist; eine Kühlabdeckung (33) zum Abdecken einer Endoberfläche des hinteren Trägers (30), um zusammen mit dem hinteren Träger (30), die Abzweigungskühlmittel-Durchführung (33c) und eine in dem stationären Kern (23) gebildete Kühlmittel-Durchführung (23a) zu bilden, und die sich durch den hinteren Träger (30) bis an die Abzweigungskühlmittel-Durchführung (32c) erstreckt.

**15.** In einem Fahrzeug eingebauter Wechselstrom-(A.C.)-Generator nach Anspruch 1, außerdem umfassend Kühlrippen (60a), die integral mit dem Rotorkern (1) gebildet sind, und wobei der vordere Träger (26) um den Lagerhalteabschnitt davon herum und in einem äußeren Umfang davon mit Löchern (26a, 26b) gebildet wird, um mit einer Drehung der Welle (1) Luft hinein und weg von dem vorderen Träger (26) zu strömen.

**16.** In einem Fahrzeug eingebauter Wechselstrom-(A.C.)-Generator nach einem der Ansprüche 1 oder 15, dadurch **gekennzeichnet,** daß die Metallumhüllung (24) und die Kühlmittel-Durchführung aus einem in dem hinteren Träger (30) vorgesehenem Kühlrohr (70, 71) zum Kühlen durch Zirkulieren einer Flüssigkeit, aus der Statorspule (11), aus dem Gleichrichter (16), aus dem Spannungsregler (17) und aus den mit dem hinteren Träger (30) assoziierten Lagern (15) bestehen.

## FIG. 1
## PRIOR ART

# FIG. 2

EP 0 231 785 B1

*FIG. 3*

# FIG. 4

# FIG. 5

# FIG. 6

# FIG. 7

## FIG. 8

# FIG. 9

# FIG. 10

# FIG. 11

# FIG. 12

# FIG. 13

# FIG. 14

# FIG. 15

EP 0 231 785 B1

*FIG.  16*